# EUROPÄISCHE PATENTSCHRIFT

(11) **EP 3 356 091 B1**
(45) Veröffentlichungstag und Bekanntmachung des Hinweises auf die Patenterteilung: **10.07.2019**
(21) Anmeldenummer: 16781683.4
(22) Anmeldetag: 23.09.2016
(51) Int. Cl.: B25J 19/00, H02P 3/16, H02P 3/26

(54) **GELENKEINRICHTUNG**
JOINT DEVICE
DISPOSITIF D'ARTICULATION

(30) Priorität: 30.09.2015 DE 102015116609
(43) Veröffentlichungstag der Anmeldung: 08.08.2018
(73) Patentinhaber: Franka Emika GmbH, 80797 München (DE)
(72) Erfinder: PIETSCH, Björn, 81549 München (DE); ROKAHR, Tim, 81245 München (DE); HADDADIN, Sami, 30173 Hannover (DE)
(74) Vertreter: Rösler Rasch van der Heide & Partner
(86) Internationale Anmeldenummer: PCT/EP2016/072649
(87) Internationale Veröffentlichungsnummer: WO 2017/055180

(56) Entgegenhaltungen:
- EP-A1- 1 857 229
- EP-A2- 3 017 917
- JP-A- H01 308 200
- US-A- 5 327 055
- US-A1- 2008 150 459

## Beschreibung

Die Erfindung betrifft eine Gelenkeinrichtung, die einen Elektromotor zur Bewirkung einer Relativbewegung zwischen einer Gelenkantriebseite und einer Gelenkabtriebseite, eine Motoransteuereinrichtung und eine Bremseinrichtung umfasst.

Eine solche Anordnung ist beispielsweise aus der US 8 410 732 B2 bekannt, bei der die Bremseinrichtung, beispielsweise bei Stromausfall, in Eingriff gelangt und dann über Reibung ein Abbremsen bis zum Stillstand erfolgt. Die Einrichtung bedarf etlicher mechanischer Teile und der Einstellung dieser, zudem ist die maximale Abbremszeit von der Reibung abhängig und verändert sich über der Zeit, ist damit also nicht wohldefiniert. Weiterer Stand der Technik zu dieser Thematik ergibt sich aus den Druckschriften: JP H01 308200 A, US 5 327 055 A, US 2008/150459 A1, EP1 857 229 A1 und EP 3 017 917 A2 (Stand der Technik unter Artikel 54(3) EPÜ).

Aufgabe der Erfindung ist es daher, die Gelenkabtriebsseite durch eine baulich vereinfachte Gelenkeinrichtung unter allen im Betrieb vorkommenden Bedingungen in einer definierten Zeitspanne zum Stillstand abzubremsen bzw. ein entsprechendes Bremsverfahren bereitzustellen.

Diese Aufgabe wird durch die in Anspruch 1 bzw. in Anspruch 13 angegebenen Merkmale gelöst. Vorteilhafte Weiterbildungen ergeben sich aus den Unteransprüchen. Der Grundgedanke der Erfindung besteht darin, immer wenn möglich, die maximal mögliche Energie durch aktive Regelung und Steuerung oder durch Auslösen eines Kurzschlusses aus dem System zu nehmen und erst in letzter Instanz eine mechanische Blockierung auszulösen, um das mechanische System selbst zu schützen, aber dennoch zu gewährleisten, dass nach einer bestimmten Maximalzeit das System sicher stillgesetzt ist.

Die erfindungsgemäße Gelenkeinrichtung zeichnet sich durch weniger mechanische Teile als die Ausführung gemäß der oben angegebenen Druckschrift aus, ist weniger fehleranfällig und weniger verschleißanfällig. Die erfindungsgemäße Gelenkeinrichtung ist kompakter und flacher und weist ein etwas geringeres Gewicht auf. Es wird keine degradierende Bremsscheibe benötigt und kein Einstellen der passenden Reibung einer Wellfederscheibe bei der Montage. Damit besteht keine Abhängigkeit von der Reibung bzw. von Reibungskoeffizienten, deren Temperaturabhängigkeit und Veränderungen über der Zeit.

Dabei schlägt die Erfindung ein Bremssystem vor, bei dem, abhängig von der Kritikalität bestimmter Ausfälle oder Fehler, das Bremssystem die maximal mögliche Energie aus dem System nimmt, im Falle von Fehlern jedoch spätestens nach einer vorgegebenen Totzeit das System sicher stillsetzt. Die Alternativen zur Stillsetzung des Systems haben im Wesentlichen drei unterschiedliche Eintrittswahrscheinlichkeiten: Die erste Alternative (der normale Bremsvorgang) ist die häufigste. Die zweite und dritte Alternative sind deutlich seltener, da sie nur im Fehlerfall eintreten. Die seltenste Alternative ist die vierte Alternative, die lediglich im Falle eines nichtdetektierten Stromausfalls oder z.B. bei einem Zwischenkreiskurzschluss eintritt.

Ausgangspunkt und Regelfall ist der normale Bremsvorgang, nämlich, wenn die Kontrolleinheit in der ersten Alternative feststellt, dass von der Betriebszustands-Feststellungseinrichtung keine oder zumindest keine sicherheitskritischen Fehler gemeldet wurden, wird die Motoransteuereinrichtung durch die Kontrolleinheit zur Abbremsung des Elektromotors angesteuert. Die Ansteuerung erfolgt durch eine Veränderung, vorzugsweise Reduzierung, Umkehrung oder einer Kombination dieser Veränderungen des dem Elektromotor zugeführten Stromes. Wenn der Bremsvorgang abgeschlossen ist, die Gelenkeinrichtung also zum Stillstand gekommen ist, kann die Sperrvorrichtung gemäß einer vorteilhaften Weiterbildung in Eingriff gebracht werden, damit die Gelenkeinrichtung anschließend auch nicht durch Eigengewichte oder sonstige äußere Einwirkungen weiter bewegt werden kann.

Sofern die Betriebszustands-Feststellungseinrichtung Fehler außerhalb der Kontrolleinheit feststellt, insbesondere sicherheitskritische Fehler, wird in einer zweiten Alternative von der Kontrolleinheit die Motoransteuereinrichtung zur Abbremsung des Elektromotors angesteuert und zu einem späteren Zeitpunkt, maximal jedoch nach einer vorgegebenen Totzeit, die Sperrvorrichtung in die Sperrstellung versetzt. Die zweite Alternative wird beispielsweise eingesetzt bei Konsistenzfehlern der Sensoreinrichtungssignale, wenn sich das Gelenk an einer unerwarteten Position befindet, bei detektiertem Spannungseinbruch, einem unerwarteten Drehmoment, bei unerwarteter Motorgeschwindigkeit oder einer Temperaturüberschreitung. In einem solchen Fall wird also das Eingreifen des Notblockiersystems (die Sperrvorrichtung) initiiert. Die definierte Totzeit bis zum Eingreifen der Sperrvorrichtung wird genutzt, um mittels aktiver Motorsteuerung Energie aus dem System zu nehmen. Spätestens nach Ablauf der Totzeit wird das System sicher zum Stillstand gebracht - durch das vorausgegangene aktive Bremsen der Motorsteuerung wird gleichzeitig gewährleistet, dass das mechatronische System maximal geschützt wird. Gemäß einer vorteilhaften Weiterbildung wird in der zweiten Alternative von der Kontrolleinheit die Motoransteuereinrichtung zum Kurzschluss oder zu einer Kombination aus Abbremsung und Kurzschluss des Elektromotors angesteuert.

Die Sensoreinrichtungen sind beispielsweise Sensoren innerhalb oder außerhalb des Gelenks zur Messung der Gelenkpositionen, der Drehmomente, der Temperatur oder der Motorgeschwindigkeit, oder auch andere Quellen wie Selbstdiagnoseeinrichtungen oder ein globaler Mastercontroller.

Wenn von der Motoranschlusskontrolleinheit jedoch die Kontrolleinheit als fehlerhaft festgestellt wird, so wird in einer dritten Alternative die Motoranschlusseinrichtung durch die Motoranschlusskontrolleinheit in den Kurzschlusszustand versetzt und zu einem späteren Zeitpunkt, maximal jedoch nach einer vorgegebenen Totzeit, fällt die Sperrvorrichtung in die Sperrstellung. Die Motoranschlusskontrolleinheit kann die Kontrolleinheit als fehlerhaft feststellen, indem sie insbesondere ein von der Kontrolleinheit regelmäßig gesendetes Signal nicht zum erwarteten Zeitpunkt erhält. Darüber hinaus kann der Inhalt dieses Signals durch eine Kontrollrechnung auf Richtigkeit überprüft werden.

Die beschriebenen Totzeiten betragen mindestens 10 ms und liegt typischerweise, abhängig von den Massen und der Motordimensionierung, zwischen 50 ms und 200 ms. Durch den Kurzschlusszustand erfolgt durch Gegeninduktion ein Abbremsen des Elektromotors und, sofern nach Ablauf der Totzeit der Elektromotor bzw. die Gelenkeinrichtung noch in Bewegung ist, wird durch die Sperrvorrichtung ein plötzlicher Stopp erzwungen. Da die Totzeit so gewählt ist, dass der Elektromotor weitgehend abgebremst ist, bleiben die durch den plötzlichen Stopp entstehenden Kräfte vertretbar gering. Der Kurzschluss dient also dazu, Energie aus dem System zu nehmen, um einen Selbstschutz der Mechanik zu bewirken. Gemäß vorteilhafter Weiterbildungen kann der jeweils beschriebene spätere Zeitpunkt bereits vor dem Ablauf der Totzeit erreicht werden, wenn der Elektromotor eine vorgegebene Restgeschwindigkeit unterschreitet, so dass das System noch schneller abgebremst wird.

In einer vierten Alternative liegt ein Stromausfall vor, der aber nicht festgestellt wird. In diesem Fall fällt die Sperrvorrichtung auf Grund fehlender Energieversorgung automatisch in die Sperrstellung. Eine erste Möglichkeit für diesen Betriebszustand ist ein kurzgeschlossenes Versorgungskabel zum Roboter oder Gelenk. Es ist keine Spannung mehr feststellbar, da auch vom Elektromotor keine Spannung zurückkommt. Ein weiterer Fall ist der Ausfall der Primär-Hauptversorgung, bei der irregulär ein derartiger Ausfall nicht erkannt wird oder das Stopp-Signal nicht schnell genug weitergeleitet wird.

Ein wesentlicher Aspekt bzw. Vorteil dieser erfindungsgemäßen Abfolge ist die Fail-safe-Funktion: die mechanische Sperrvorrichtung (Bremse) fällt immer ein, entweder aufgrund aktiver Ansteuerung, nach Ablauf einer Totzeit oder bei einem undetektierten Ausfall der Stromversorgung.

Gemäß einer vorteilhaften Weiterbildung der Erfindung schließt die Motoranschlusseinrichtung den Elektromotor getaktet kurz. Die Taktung bewirkt einen Schutz der Elektronik, da so hohe Ströme, die durch die Induktion eines ungetakteten Kurzschlusses zu Stande kommen würden, reduziert werden. Vorzugsweise ist eine kurze Weite bei hoher Geschwindigkeit, länger werdende Weiten bei langsamer werdender Geschwindigkeit vorgesehen. Vorteilhaft ist eine Taktung in der Größenordnung der Taktung der Motoransteuerung. Vorzugsweise liegt die Taktung des Kurzschlusses bei 40 kHz.

Gemäß einer vorteilhaften Weiterbildung der Erfindung umfasst diese eine Energiepuffereinrichtung. Besonders bevorzugt hat das Gesamtsystem (z.B. ein Roboter mit mindestens einer derartigen Gelenkeinrichtung) ein erweitertes Netzteil, das die Pufferung von Energie erlaubt. Wenn kein Strom mehr in das Netzteil fließt, können das System und seine Gelenkeinrichtungen noch kurz mit Strom weiter versorgt werden. Die System-Hauptsteuerungseinheit kann daher ein Bremssignal an alle Gelenkeinheiten senden, sobald sie mittels einer Eingangsspannungskontrolle am Netzteil feststellt, dass kein Strom mehr in das Netzteil fließt.

Gemäß einer vorteilhaften Weiterbildung wird in einer fünften Alternative ein Stromausfall festgestellt, und die Motoranschlusskontrolleinheit steuert die Motoransteuereinrichtung zur Abbremsung des Elektromotors an und versetzt zu einem späteren Zeitpunkt, maximal jedoch nach einer vorgegebenen Totzeit, die Sperrvorrichtung in die Sperrstellung. Ein Stromausfall liegt hier bei einer unterbrochenen Stromversorgung vor, es besteht also kein Kurzschluss. Sofern sich der Elektromotor noch bewegt, kommt noch Energie aus diesem in die Elektronik, die die Elektronik noch zur Motorregelung nutzen kann und die Sperrvorrichtung währenddessen noch in der Freigabestellung halten kann. Bewegt sich der Elektromotor hingegen nicht mehr, so ist eine Motorregelung zwar nicht mehr möglich aber auch nicht nötig, da der Motor nicht mehr abgebremst werden muss, bevor die Sperrvorrichtung in die Sperrstellung fällt. Diese Alternative tritt insbesondere ein, wenn die Primär-Hauptversorgung ausfällt, dieser Ausfall, insbesondere von einer Hauptsteuerungseinheit, festgestellt wird und um ein Signal, vorzugsweise von der Hauptsteuerungseinheit, an die Gelenkeinrichtung zu schicken, so dass diese wie beschrieben in diesem Betriebszustand geregelt abbremst und dann die Sperrvorrichtung in die Sperrstellung bewegt.

Die fünfte Alternative weist die gleiche Eintrittswahrscheinlichkeit wie die zweite und dritte Alternative auf. Sie zielt ebenfalls darauf ab, in den nicht regulären Fällen noch Energie aus dem System zu nehmen, bevor die mechanische Bremse einfällt.

Vorzugsweise ist die Sperrvorrichtung in Form eines Sternrads ausgebildet.

Vorzugsweise ist hinter dem Elektromotor und der Sperrvorrichtung ein Getriebe angeordnet. Die Gelenkeinrichtung erhält durch die Verwendung des Bremssterns Spiel zwischen den Zacken. Wenn ein Getriebe hinter dem Elektromotor und der Sperrvorrichtung angeordnet ist, reduziert sich das Spiel abtriebsseitig. Dieser Effekt ist bedeutsam, da sich das Spiel über die Gelenke hin zu einem Endeffektor (z.B. eines Roboters) summiert. Hinzu kommt, dass das mechanische System durch das Getriebe selbst geschützt ist. Dabei ist zu beachten, dass dieser Effekt vor allem in unteren Achsen eintritt, da dort durch das Getriebe weniger Kraft auf das Sternrad wirkt, da es sich um eine entkoppelnde Wirkung handelt. Als Teil des Sicherheitskonzepts ist das Getriebe so ausgelegt, dass es nicht durchdrehend versagen kann, sondern blockiert.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
Figur 1: eine Prinzipdarstellung der erfindungsgemäßen Anordnung;
Figur 2: eine perspektivische Darstellung einer Sperrvorrichtung.

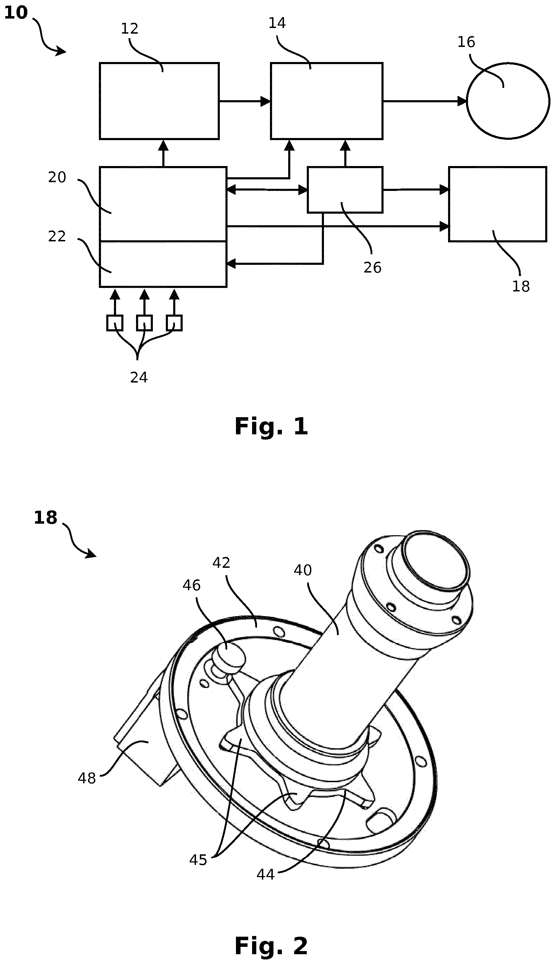

Wie in Figur 1 gezeigt, umfasst die Gelenkeinrichtung 10 eine Motoransteuereinrichtung 12, die eingerichtet ist, über eine Motoranschlusseinrichtung 14 einen Elektromotor 16 mit Energie zu versorgen oder Energie abzuführen. Die Motoranschlusseinrichtung 14 ist dabei eingerichtet, im Normalzustand den Energieaustausch zwischen der Motoransteuereinrichtung und dem Elektromotor ungehindert durchzulassen, in einem Kurzschlusszustand den Elektromotor 16 dauerhaft oder pulsierend kurzzuschließen.

Ferner ist eine mechanisch wirkende, elektrisch ansteuerbare Sperrvorrichtung 18 umfasst, die in einer Sperrstellung ohne Energiezufuhr eine Relativbewegung zwischen einer nicht gezeigten Gelenkantriebseite und einer nicht gezeigten Gelenkabtriebseite formschlüssig sperrt und in einer Freigabestellung mit Energiezufuhr diese Relativbewegung freigibt. In Figur 2 ist die Sperrvorrichtung 18 näher dargestellt.

Eine Kontrolleinheit 20 ist eingerichtet, um die Motoransteuereinrichtung 14 und die Sperrvorrichtung 18 in Abhängigkeit von verschiedenen Alternativen in einer Weise anzusteuern, dass die Gelenkeinrichtung 10 stillgesetzt wird. Dazu umfasst die Kontrolleinheit 20 eine Betriebszustands-Feststellungseinrichtung 22, die mit einer Anzahl Sensoreinrichtungen 24 verbunden ist und eingerichtet ist, verschiedene Betriebszustände festzustellen.

Eine Motoranschlusskontrolleinheit 26 ist eingerichtet, die Motoranschlusseinrichtung 14 und die Sperrvorrichtung 18 in Abhängigkeit von verschiedenen Alternativen in einer Weise anzusteuern, dass die Gelenkeinrichtung 10 stillgesetzt wird. Dazu gibt die Kontrolleinheit 20 an die Motoranschlusskontrolleinheit 26 regelmäßig Signale: Wenn kein oder ein fehlerhaftes Signal zum erwarteten Zeitpunkt eintrifft, wird die Motoranschlusskontrolleinheit in der dritten Alternative in den Kurzschlusszustand versetzt und zu einem späteren Zeitpunkt, maximal jedoch nach einer vorgegebenen Totzeit, wird die Sperrvorrichtung 18 in die Sperrstellung versetzt.

In Figur 2 ist perspektivisch die Sperrvorrichtung 18 gezeigt. Diese umfasst eine Antriebswelle 40 und eine gehäusefeste Lagerscheibe 42, welche über nicht dargestellte Lager die Antriebswelle 40 lagert. An der Antriebswelle 40 ist ein Sternrad 44 mit mehreren Zacken 45 fixiert, das sich mit dieser dreht. An der ortfesten Lagerscheibe 42 ist ein Kopfbolzen 46 mit einem radial vergrößerten Kopf angebracht, der mittels einer nicht näher dargestellten, im Gehäuse 48 untergebrachten Magnetbetätigungsvorrichtung zwischen einer Sperrstellung, welche diese ohne Energiezufuhr einnimmt und einer bei Energiezufuhr eingenommenen Freigabestellung bewegbar ist. In der in Figur 2 gezeigten Freigabestellung befindet sich der Kopf des Kopfbolzens 46 in Axialrichtung außerhalb des Eingriffs der Zacken 45 des Sternrades 44. Bei Energieabschaltung wird der Kopfbolzen 46 durch Federkraft in Richtung der Lagerscheibe 42 gezogen und gelangt damit zwischen benachbarte Zacken 45 des Sternrades 44. Damit erfolgt eine abrupte Abbremsung der Antriebswelle 40, sobald der nächste Zacken 45 gegen den Kopf des Kopfbolzens 46 stößt.

Sofern sich der Kopf des Kopfbolzens 46 im Moment der Stromabschaltung oberhalb eines Zackens 45 befindet, rutscht dieser bedingt durch die Federkraft nach ganz unten, sobald sich das Sternrad und damit der Zacken 45 weiter bewegt hat.

Die beschriebene Sperrvorrichtung erlaubt auch eine manuelle Lüftung. Wenn die Gelenkeinrichtung von einem Gehäuse umfasst ist, muss diese eine entsprechende Aussparung aufweisen.

Es wird mindestens ein Zacken 45 benötigt, vorzugsweise mindestens zwei, um Symmetrie auf der Antriebswelle 40 zu erzeugen, sonst entsteht eine Unwucht. Vorzugsweise werden 5 oder 6 Zacken 45 vorgesehen. Je höher die Anzahl, desto höher die Möglichkeit auf einen Zacken 45 zu treffen, aber desto schneller schlägt auch ein Zacken 45 auf den Kopfbolzen 46.

Vorzugsweise sind die Spitzen der Zacken 45 angespitzt. Die Schräge der Spitzen dient dazu, nur einen Teil der Kraft bei dem Aufschlag auf den Kopfbolzen 46 in die Biegung des Zackens 45, der ja als Biegebalken fungiert, zu lenken und den anderen Teil längs zum Balken abzuleiten. Idealerweise hat die Schräge einen Winkel von 30° - 60°, besonders vorteilhaft sind 45°.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10: Gelenkeinrichtung
- 12: Motoransteuereinrichtung
- 14: Motoranschlusseinrichtung
- 16: Elektromotor
- 18: Sperrvorrichtung
- 20: Kontrolleinheit
- 22: Feststellungseinrichtung
- 24: Sensoreinrichtungen
- 26: Motoranschlusskontrolleinheit
- 40: Antriebswelle
- 42: Lagerscheibe
- 44: Stern rad
- 45: Zacken des Sternrads 44
- 46: Kopfbolzen
- 48: Gehäuse

## Patentansprüche

1. Gelenkeinrichtung (10) mit folgenden Merkmalen:
- ein Elektromotor (16) zur Bewirkung einer Relativbewegung zwischen einer Gelenkantriebseite und einer Gelenkabtriebseite,
- eine Motoransteuereinrichtung (12), die eingerichtet ist, den Elektromotor (16) mit Energie zu versorgen oder Energie abzuführen,
- eine Motoranschlusseinrichtung (14), die eingerichtet ist, im Normalzustand den Energieaustausch zwischen der Motorsteuereinrichtung und dem Elektromotor unbeeinflusst durchzuschleusen, in einem Kurzschlusszustand den Elektromotor (16) dauerhaft oder pulsierend kurzzuschließen,
- eine mechanisch wirkende, elektrisch ansteuerbare Sperrvorrichtung (18), die in einer Sperrstellung ohne Energiezufuhr eine Relativbewegung zwischen der Gelenkantriebseite und der Gelenkabtriebseite formschlüssig sperrt und in einer Freigabestellung mit Energiezufuhr diese Relativbewegung freigibt,
- eine Kontrolleinheit (20), welche eingerichtet ist, die Motoransteuereinrichtung (12), die Motoranschlusseinrichtung (14) und die Sperrvorrichtung (18) in Abhängigkeit von verschiedenen Betriebszuständen in einer Weise anzusteuern, dass die Gelenkeinrichtung (10) stillsetzbar ist,
- eine Motoranschlusskontrolleinheit (26), welche eingerichtet ist, die Motoranschlusseinrichtung (14) und die Sperrvorrichtung (18) auf verschiedene Weisen anzusteuern, dass die Gelenkeinrichtung (10) stillsetzbar ist,
- die Kontrolleinheit eine Betriebszustands-Feststellungseinrichtung (22) umfasst, die mit einer Anzahl Sensoreinrichtungen (24) verbunden ist und eingerichtet ist, verschiedene Betriebszustände festzustellen,
- wobei die Gelenkeinrichtung (10) eingerichtet ist, deren Stillsetzung durch folgende Verfahrensalternativen zu bewirken:
- wenn der Kontrolleinheit (20) in einer ersten Alternative keine Fehler vorliegen, wird die Motoransteuereinrichtung (12) zur Abbremsung des Elektromotors (16) verwendet,
- wenn von der Betriebszustands-Feststellungseinrichtung (22) Fehler außerhalb der Kontrolleinheit (20) festgestellt werden, wird in einer zweiten Alternative von der Kontrolleinheit (20) die Motoransteuereinrichtung (12) zur Abbremsung des Elektromotors (16) angesteuert und zu einem späteren Zeitpunkt, maximal jedoch nach einer vorgegebenen Totzeit, die Sperrvorrichtung (18) in die Sperrstellung versetzt,
- wenn von der Motoranschlusskontrolleinheit (26) die Kontrolleinheit (20) als fehlerhaft festgestellt wird, wird in einer dritten Alternative die Motoranschlusseinrichtung (14) in den Kurzschlusszustand versetzt und zu einem späteren Zeitpunkt, spätestens jedoch nach einer vorgegebenen Totzeit, die Sperrvorrichtung (18) in die Sperrstellung versetzt,
- wenn ein Stromausfall vorliegt, aber nicht feststellbar ist, wird die Sperrvorrichtung (18) in einer vierten Alternative auf Grund fehlender Energieversorgung in die Sperrstellung versetzt.

2. Gelenkeinrichtung nach Anspruch 1, **dadurch gekennzeichnet, dass** in der ersten Alternative nach dem Stillstand des Elektromotors (16) die Sperrvorrichtung (18) in die Sperrstellung schaltbar ist.

3. Gelenkeinrichtung nach Anspruch 1 oder 2, **dadurch gekennzeichnet, dass** der spätere Zeitpunkt bei der zweiten Alternative bereits vor dem Ablauf der Totzeit erreicht wird, wenn der Elektromotor (16) eine vorgegebene Restgeschwindigkeit unterschreitet.

4. Gelenkeinrichtung nach Anspruch 1, 2 oder 3, **dadurch gekennzeichnet, dass** der spätere Zeitpunkt bei der dritten Alternative bereits vor dem Ablauf der Totzeit erreicht wird, wenn der Elektromotor (16) eine vorgegebene Restgeschwindigkeit unterschreitet.

5. Gelenkeinrichtung nach Anspruch 1, 2, 3 oder 4, **dadurch gekennzeichnet, dass** in der zweiten Alternative von der Kontrolleinheit (20) die Motoransteuereinrichtung (12) zum Kurzschluss oder zu einer Kombination aus Abbremsung und Kurzschluss des Elektromotors (16) angesteuert wird.

6. Gelenkeinrichtung nach einem der vorherigen Ansprüche, **dadurch gekennzeichnet, dass** die Motoranschlusseinrichtung (14) den Elektromotor (16) getaktet kurzschließt.

7. Gelenkeinrichtung nach Anspruch 6, **dadurch gekennzeichnet, dass** die Taktung im Frequenzbereich der Taktung der Motoransteuerung liegt.

8. Gelenkeinrichtung nach einem der vorherigen Ansprüche, **dadurch gekennzeichnet, dass** diese oder das Gesamtsystem eine Energiepuffereinrichtung umfasst.

9. Gelenkeinrichtung nach einem der vorherigen Ansprüche, **dadurch gekennzeichnet, dass** eine fünfte Alternative vorliegt, in der ein Stromausfall feststellbar ist und die Kontrolleinheit (20) die Motoransteuereinrichtung (12) zur Abbremsung des Elektromotors (16) ansteuert und zu einem späteren Zeitpunkt, maximal jedoch nach einer vorgegebenen Totzeit die Sperrvorrichtung (18) in die Sperrstellung versetzt.

10. Gelenkeinrichtung nach Anspruch 9, **dadurch gekennzeichnet, dass** der spätere Zeitpunkt bereits vor dem Ablauf der Totzeit erreicht wird, wenn der Elektromotor (16) eine vorgegebene Restgeschwindigkeit unterschreitet.

11. Gelenkeinheit nach einem der vorherigen Ansprüche, **dadurch gekennzeichnet, dass** hinter dem Elektromotor (16) und der Sperrvorrichtung (18) ein Getriebe angeordnet ist.

12. Robotereinrichtung, die mindestens eine Gelenkeinheit nach einem der vorherigen Ansprüche umfasst.

13. Verfahren zum gezielten Abbremsen einer Gelenkeinrichtung (10) mit folgenden Merkmalen:
- ein Elektromotor (16) zur Bewirkung einer Relativbewegung zwischen einer Gelenkantriebseite und einer Gelenkabtriebseite,
- eine Motoransteuereinrichtung (12), die eingerichtet ist, den Elektromotor (16) mit Energie zu versorgen oder Energie abzuführen,
- eine Motoranschlusseinrichtung (14), die eingerichtet ist, im Normalzustand den Energieaustausch zwischen der Motorsteuereinrichtung und dem Elektromotor unbeeinflusst durchzuschleusen, in einem Kurzschlusszustand den Elektromotor (16) dauerhaft oder pulsierend kurzzuschließen,
- eine mechanisch wirkende, elektrisch ansteuerbare Sperrvorrichtung (18), die in einer Sperrstellung ohne Energiezufuhr eine Relativbewegung zwischen der Gelenkantriebseite und der Gelenkabtriebseite formschlüssig sperrt und in einer Freigabestellung mit Energiezufuhr diese Relativbewegung freigibt,
- eine Kontrolleinheit (20), welche eingerichtet ist, die Motoransteuereinrichtung (12), die Motoranschlusseinrichtung (14) und die Sperrvorrichtung (18) in Abhängigkeit von verschiedenen Betriebszuständen in einer Weise anzusteuern, dass die Gelenkeinrichtung (10) stillsetzbar ist,
- eine Motoranschlusskontrolleinheit (26), welche eingerichtet ist, die Motoranschlusseinrichtung (14) und die Sperrvorrichtung (18) auf verschiedene Weisen anzusteuern, dass die Gelenkeinrichtung (10) stillsetzbar ist,
- die Kontrolleinheit eine Betriebszustands-Feststellungseinrichtung (22) umfasst, die mit einer Anzahl Sensoreinrichtungen (24) verbunden ist und eingerichtet ist, verschiedene Betriebszustände festzustellen,
- wobei die Gelenkeinrichtung (10) eingerichtet ist, deren Stillsetzung durch folgende Verfahrensalternativen zu bewirken:
- wenn der Kontrolleinheit (20) in einer ersten Alternative keine Fehler vorliegen, wird die Motoransteuereinrichtung (12) zur Abbremsung des Elektromotors (16) verwendet,
- wenn von der Betriebszustands-Feststellungseinrichtung (22) Fehler außerhalb der Kontrolleinheit (20) festgestellt werden, wird in einer zweiten Alternative von der Kontrolleinheit (20) die Motoransteuereinrichtung (12) zur Abbremsung des Elektromotors (16) angesteuert und zu einem späteren Zeitpunkt, maximal jedoch nach einer vorgegebenen Totzeit, die Sperrvorrichtung (18) in die Sperrstellung versetzt,
- wenn von der Motoranschlusskontrolleinheit (26) die Kontrolleinheit (20) als fehlerhaft festgestellt wird, wird in einer dritten Alternative die Motoranschlusseinrichtung (14) in den Kurzschlusszustand versetzt und zu einem späteren Zeitpunkt, spätestens jedoch nach einer vorgegebenen Totzeit, die Sperrvorrichtung (18) in die Sperrstellung versetzt,
- wenn ein Stromausfall vorliegt, aber nicht festgestellt wird, wird die Sperrvorrichtung (18) in einer vierten Alternative auf Grund fehlender Energieversorgung in die Sperrstellung versetzt.

## Claims

1. Joint device (10) with the following features:
- an electric motor (16) for causing a relative movement between a joint driving side and a driven joint side,
- a motor driver (12), which is designed to supply the electric motor (16) with energy or to discharge energy,
- a motor connection device (14), which is designed to guide the energy exchange in an unaffected way between the motor control unit and the electric motor in the normal state, to short circuit continuously or in a pulsed manner in a short-circuit condition of the electric motor (16),
- a mechanically acting, electrically controllable locking device (18), which blocks a relative movement between the joint driving side and the driven joint side in a positive-locking locked position when not energized and, in a release position when energized, releases this relative movement,
- a control unit (20), which is designed to control the motor driver (12), the motor connection device (14), and the locking device (18) depending on different operating states in a way such that the joint device (10) is stoppable,
- a motor connection control unit (26), which is designed to control the motor connection device (14) and the locking device (18) in different ways so that the joint device (10) is stoppable,
- the control unit comprises an operating state determination unit (22), which is connected to a number of sensor devices (24) and is designed to determine different operating states,
- wherein the joint device (10) is designed to cause its stoppage through the following alternative methods:
- in a first alternative, if no errors are present in the control unit (20), then the motor driver (12) is used for braking the electric motor (16),
- in a second alternative, if errors are detected outside of the control unit (20) by the operating state determination device (22), then the motor driver (12) is controlled by the control unit (20) to brake the electric motor (16) and at a later point in time, however, at most after a predetermined dead time, the locking device (18) is displaced into the locked position,
- in a third alternative, if the control unit (20) is determined to be defective by the motor connection control unit (26), then the motor connection device (14) is shifted into the short circuit condition and at a later point in time, however at the latest after a predetermined dead time, the locking device (18) is displaced into the locked position,
- in a fourth alternative, if a power failure is present yet is not detectable, then the locking device (18) is displaced into the locked position due to the lack of a power supply.

2. Joint device according to claim 1, **characterized in that**, in the first alternative, the locking device (18) is switchable into the locked position after the stoppage of the electric motor (16).

3. Joint device according to claim 1 or 2, **characterized in that** the later point in time in the second alternative is already reached prior to the expiration of the dead time, if the electric motor (16) exceeds a predetermined residual speed.

4. Joint device according to claim 1, 2 or 3, **characterized in that** the later point in time in the third alternative is already reached prior to the expiration of the dead time, if the electric motor (16) exceeds a predetermined residual speed.

5. Joint device according to claim 1, 2, 3 or 4, **characterized in that**, in the second alternative, the motor driver (12) is controlled by the control unit (20) to short circuit the electric motor or to carry out a combination of braking and short circuiting of the electric motor (16).

6. Joint device according to any one of the preceding claims, **characterized in that** motor control unit (14) carries out a clocked short circuit of the electric motor (16).

7. Joint device according to claim 6, **characterized in that** the clocking lies in the frequency range of the motor control clocking.

8. Joint device according to any one of the preceding claims, **characterized in that** said joint device or the entire system comprises an energy buffer device.

9. Joint device according to any one of the preceding claims, **characterized in that** a fifth alternative is available, in which a power failure is detectable and the control unit (20) controls the motor driver (12) to brake the electric motor (16) and at a later point in time, however, at most after a predetermined dead time, displaces the locking device (18) into the locked position.

10. Joint device according to claim 9, **characterized in that** the later point in time is already reached prior to the expiration of the dead time, if the electric motor (16) exceeds a predetermined residual speed.

11. Joint device according to any one of the preceding claims, **characterized in that** a transmission is arranged downstream of the electric motor (16) and the locking device (18).

12. Robot device which comprises at least one joint device according to one of the preceding claims.

13. Method for targeted braking of a joint device (10) with the following features:
- an electric motor (16) for causing a relative movement between a joint driving side and a driven joint side,
- a motor driver (12), which is designed to supply the electric motor (16) with energy or to discharge energy,
- a motor connection device (14), which is designed to guide the energy exchange in an unaffected way between the motor control unit and the electric motor in the normal state, to short circuit continuously or in a pulsed manner in a short-circuit condition of the electric motor (16),
- a mechanically acting, electrically controllable locking device (18), which blocks a relative movement between the joint driving side and the driven joint side in a positive-locking locked position when not energized and, in a release position when energized, releases this relative movement,
- a control unit (20), which is designed to control the motor driver (12), the motor connection device (14), and the locking device (18) depending on different operating states in a way such that the joint device (10) is stoppable,
- a motor connection control unit (26), which is designed to control the motor connection device (14) and the locking device (18) in different ways so that the joint device (10) is stoppable,
- the control unit comprises an operating state determination unit (22), which is connected to a number of sensor devices (24) and is designed to determine different operating states,
- wherein the joint device (10) is designed to cause its stoppage through the following alternative methods:
- in a first alternative, if no errors are present in the control unit (20), then the motor driver (12) is used for braking the electric motor (16),
- in a second alternative, if errors are detected outside of the control unit (20) by the operating state determination device (22), then the motor driver (12) is controlled by the control unit (20) to brake the electric motor (16) and at a later point in time, however, at most after a predetermined dead time, the locking device (18) is displaced into the locked position,
- in a third alternative, if the control unit (20) is determined to be defective by the motor connection control unit (26), then the motor connection device (14) is shifted into the short circuit condition and at a later point in time, however at the latest after a predetermined dead time, the locking device (18) is displaced into the locked position,
- in a fourth alternative, if a power failure is present yet is not detectable, then the locking device (18) is displaced into the locked position due to the lack of a power supply.

## Revendications

1. Dispositif d'articulation (10) présentant les caractéristiques suivantes :
- un moteur électrique (16) destiné à provoquer un déplacement entre un côté d'entraînement de l'articulation et un côté de sortie de l'articulation,
- un système d'actionnement du moteur (12), qui est aménagé pour alimenter le moteur électrique (16) en énergie ou pour évacuer de l'énergie,
- un système de branchement du moteur (14), qui est aménagé pour faire passer sans influence dans l'état normal l'échange d'énergie entre le système de commande du moteur et le moteur électrique, court-circuiter le moteur électrique (16) durablement ou par impulsions dans un état de court-circuit,
- un dispositif de verrouillage (18) à effet mécanique, électriquement activable, qui dans une position de verrouillage sans apport d'énergie bloque par complémentarité de forme un déplacement relatif entre le côté d'entraînement de l'articulation et le côté de sortie de l'articulation et dans une position de libération avec apport d'énergie libère ledit déplacement relatif,
- un module de contrôle (20), lequel est aménagé pour actionner le système d'actionnement du moteur (12), le système de branchement du moteur (14) et le dispositif de blocage (18) en fonction de différents états de service, de manière que le dispositif d'articulation (10) puisse être mis à l'arrêt,
- un module de contrôle de branchement du moteur (26), lequel est aménagé pour actionner le système de branchement du moteur (14) et le dispositif de blocage (18) de différentes manières, pour que le dispositif d'articulation (10) puisse être mis à l'arrêt,
- le module de contrôle comprend un système de détermination de l'état de service (22) qui est connecté sur un nombre de systèmes de capteurs (24) et qui est aménagé pour déterminer différents états de service,
- le dispositif d'articulation (10) étant aménagé pour provoquer sa mise à l'arrêt par les variantes de procédé suivantes :
- lorsque selon une première variante, le module de contrôle (20) ne constate aucun défaut, le système d'actionnement du moteur (12) est utilisé pour freiner le moteur électrique (16),
- lorsque le système de détermination de l'état de service (22) constate des défauts extérieurs au module de contrôle (20), selon une deuxième variante, le module de contrôle (20) actionne le système d'actionnement du moteur (12) pour freiner le moteur électrique (16) et à un moment ultérieur, mais au maximum après un temps mort prédéfini, passe le dispositif de blocage (18) dans la position de blocage,
- lorsque le module de contrôle de branchement du moteur (26) constate que module de contrôle (20) est défectueux, selon une troisième variante, le, système de branchement du moteur (14) est passé dans l'état de court-circuit et à un moment ultérieur, mais au maximum après un temps mort prédéfini, le dispositif de blocage (18) est passé dans la position de blocage,
- en présence d'une panne de courant, qui n'est pourtant pas déterminable, selon une quatrième variante, du fait du défaut de son alimentation en énergie, le dispositif de blocage (18) est passé dans la position de blocage.

2. Dispositif d'articulation selon la revendication 1, **caractérisé en ce que** dans la première variante, après l'arrêt du moteur électrique (16), le die dispositif de blocage (18) est commutable dans la position de blocage.

3. Dispositif d'articulation selon la revendication 1 ou 2, **caractérisé en ce que** pour la deuxième variante, le moment ultérieur est déjà atteint avant l'écoulement du temps mort si le moteur électrique (16) n'atteint pas une vitesse résiduelle prédéfinie.

4. Dispositif d'articulation selon la revendication 1, 2 ou 3, **caractérisé en ce que** pour la troisième variante, le moment ultérieur est déjà atteint avant l'écoulement du temps mort si le moteur électrique (16) n'atteint pas une vitesse résiduelle prédéfinie.

5. Dispositif d'articulation selon la revendication 1, 2, 3 ou 4, **caractérisé en ce que** pour la deuxième variante, le système d'actionnement du moteur (12) est actionné par le module de contrôle (20) en un court-circuit ou en une association de freinage et de court-circuit du moteur électrique (16).

6. Dispositif d'articulation selon l'une quelconque des revendications précédentes, **caractérisé en ce que** le système de branchement du moteur (14) court-circuite le moteur électrique (16) de manière cadencée.

7. Dispositif d'articulation selon la revendication 6, **caractérisé en ce que** le cadencement se situe dans la gamme de fréquence du cadencement de l'actionnement du moteur.

8. Dispositif d'articulation selon l'une quelconque des revendications précédentes, **caractérisé en ce que** celui-ci ou l'ensemble du système comprend un système de réserve d'énergie.

9. Dispositif d'articulation selon l'une quelconque des revendications précédentes, **caractérisé en ce qu'**il existe une cinquième variante, selon laquelle une panne de courant est déterminable et le module de contrôle (20) actionne le système d'actionnement du moteur (12) pour le freinage du moteur électrique (16) et à un moment ultérieur, mais au maximum après un temps mort prédéfini, passe le dispositif de blocage (18) dans la position de blocage.

10. Dispositif d'articulation selon la revendication 9, **caractérisé en ce que** le moment ultérieur est déjà atteint avant l'écoulement du temps mort si le moteur électrique (16) n'atteint pas une vitesse résiduelle prédéfinie.

11. Module d'articulation selon l'une quelconque des revendications précédentes, **caractérisé en ce que** derrière le moteur électrique (16) et le dispositif de blocage (18) est placée une transmission.

12. Système robotisé, qui comprend au moins un module d'articulation selon l'une quelconque des revendications précédentes.

13. Procédé destiné au freinage ciblé d'un dispositif d'articulation (10), présentant les caractéristiques suivantes :
- un moteur électrique (16) destiné à provoquer un déplacement entre un côté d'entraînement de l'articulation et un côté de sortie de l'articulation,
- un système d'actionnement du moteur (12), qui est aménagé pour alimenter le moteur électrique (16) en énergie ou pour évacuer de l'énergie,
- un système de branchement du moteur (14), qui est aménagé pour faire passer sans influence dans l'état normal l'échange d'énergie entre le système de commande du moteur et le moteur électrique, court-circuiter le moteur électrique (16) durablement ou par impulsions dans un état de court-circuit,
- un dispositif de verrouillage (18) à effet mécanique, électriquement activable, qui dans une position de verrouillage sans apport d'énergie bloque par complémentarité de forme un déplacement relatif entre le côté d'entraînement de l'articulation et le côté de sortie de l'articulation et dans une position de libération avec apport d'énergie libère ledit déplacement relatif,
- un module de contrôle (20), lequel est aménagé pour actionner le système d'actionnement du moteur (12), le système de branchement du moteur (14) et le dispositif de blocage (18) en fonction de différents états de service, de manière que le dispositif d'articulation (10) puisse être mis à l'arrêt,
- un module de contrôle de branchement du moteur (26), lequel est aménagé pour actionner le système de branchement du moteur (14) et le dispositif de blocage (18) de différentes manières, pour que le dispositif d'articulation (10) puisse être mis à l'arrêt,
- le module de contrôle comprend un système de détermination de l'état de service (22) qui est connecté sur un nombre de systèmes de capteurs (24) et qui est aménagé pour déterminer différents états de service,
- le dispositif d'articulation (10) étant aménagé pour provoquer sa mise à l'arrêt par les variantes de procédé suivantes :
- lorsque selon une première variante, le module de contrôle (20) ne constate aucun défaut, le système d'actionnement du moteur (12) est utilisé pour freiner le moteur électrique (16),
- lorsque le système de détermination de l'état de service (22) constate des défauts extérieurs au module de contrôle (20), selon une deuxième variante, le module de contrôle (20) actionne le système d'actionnement du moteur (12) pour freiner le moteur électrique (16) et à un moment ultérieur, mais au maximum après un temps mort prédéfini, passe le dispositif de blocage (18) dans la position de blocage,
- lorsque le module de contrôle de branchement du moteur (26) constate que module de contrôle (20) est défectueux, selon une troisième variante, le, système de branchement du moteur (14) est passé dans l'état de court-circuit et à un moment ultérieur, mais au maximum après un temps mort prédéfini, le dispositif de blocage (18) est passé dans la position de blocage,
- en présence d'une panne de courant, qui n'est pourtant pas déterminable, selon une quatrième variante, du fait du défaut de son alimentation en énergie, le dispositif de blocage (18) est passé dans la position de blocage.
